# EUROPÄISCHE PATENTSCHRIFT

(11) **EP 2 037 164 B1**
(45) Veröffentlichungstag und Bekanntmachung des Hinweises auf die Patenterteilung: **01.05.2013**
(21) Anmeldenummer: 08105171.6
(22) Anmeldetag: 28.08.2008
(51) Int. Cl.: F16L 3/10, F16L 55/035, F16L 59/135

(54) **Rohrschelle**
Pipe clamp
Collier de serrage

(30) Priorität: 12.09.2007 DE 102007000487
(43) Veröffentlichungstag der Anmeldung: 18.03.2009
(73) Patentinhaber: HILTI Aktiengesellschaft, 9494 Schaan (LI)
(72) Erfinder: Schmitzer, Harald, 8003, Zürich (CH); Hermann, Fritz, 86899, Landsberg (DE); Gonzales, Rosa Maria, 15404, Ferrol (ES); Schierscher, Gabriel, 9494, Schaan (LI); Rosenkranz, Falk, 9658, Wildhaus (CH); Unverzagt, Stefan, 6800, Feldkirch (AT)
(74) Vertreter: Wildi, Roland

(56) Entgegenhaltungen:
- WO-A1-03/048626
- DE-A1- 4 029 090
- DE-A1- 4 213 893
- JP-A- 8 054 084

## Beschreibung

Die Erfindung betrifft eine Rohrschelle mit zumindest einem eine Krümmung aufweisenden Schellenbügel, der einen krümmungsseitig innenliegenden Wandabschnitt aufweist, und mit mehreren Auflageelementen für eine festzulegende Leitung, wobei die Auflageelemente jeweils einteilig sind und einen krümmungsseitig innenliegenden, zum krümmungsseitig innenliegenden Wandabschnitt des zumindest einen Schellenbügels beabstandeten Auflageabschnitt aufweisen, wobei der Auflageabschnitt frei auskragend an dem Auflageelement angeordnet ist.

Eine gattungsgemässe Rohrschelle ist aus der WO 03/048626 A1 bekannt. Eine gattungsgemässe Rohrschelle dient der Fixierung und Halterung von Leitungen, wie z. B. von Rohren, Kabeln oder dergleichen, an einem Untergrund oder an einem Träger. Zur Isolierung der fixierten Leitung, wie z. B. zur Schallisolierung von Rohrleitungen gegenüber Gebäudeteilen werden Einlageelemente aus einem elastischen Material an dem Schellenbügel vorgesehen, welche gegen unerwünschte Verschiebung am Schellenbügel festgelegt sind.

Aus der CH 630 160 A5 ist eine Rohrschelle mit mehreren, flexibel anordnenbaren Auflageelement en für eine festzulegende Leitung bekannt, die jeweils einteilig ausgebildet sind und einen krümmungsseitig innenliegenden, zum krümmungsseitig innenliegenden Wandabschnitt des zumindest einen Schellenbügels beabstandeten Auflageabschnitt aufweisen. Über Verbindungsmittel oder über zwei seitlich angeordnete, U-förmige Halteabschnitte, die den Schellenbügel seitlich umgreifen, sind die Auflageelemente an dem Schellenbügel festgelegt.

Für eine vorteilhafte Entkopplung insbesondere gegenüber Schall sind die Auflageelemente aus einem möglichst federweichen Material, wie beispielsweise Ethylen-Propylen-DienKautschuk (EPDM), gefertigt.

Nachteilig an dieser Art von Auflageelementen ist, dass das für die Auflageelemente verwendete Material eine Dämpfung aufweist, so dass sich dieses nicht wie eine ideale Feder verhält und eine optimale Entkopplung behindert wird.

Aus der JP 08-054084 A ist eine Rohrschelle mit einem eine Krümmung aufweisenden Schellenbügel und mit mehreren, aus dem Schellenbügel ausgeformten Auflageelementen bekannt, wobei die Auflageelemente einen krümmungsseitig innenliegenden, zum ersten Wandabschnitt des Schellenbügels beabstandeten und federnden Auflageabschnitt aufweisen. Die Auflageelemente werden aus dem Schellenbügel gestanzt und nach krümmungsseitig innen abgebogen.

Nachteilig an dieser Rohrschelle ist, dass die Materialstärke der Auflageelemente durch die Blechdicke des Schellenbügels bestimmt ist und nicht an besondere Anwendungen anpassbar ist. Zudem ist die bekannte Rohrschelle nur für einen bestimmten, kleinen Bereich von Leitungsdurchmessern verwendbar. Des Weiteren kann die in Umfangsrichtung des Schellenbügels verlaufende Ausrichtung der Auflagerabschnitte bei einer Justierung einer eingelegten Leitung diese beschädigen.

Die DE 40 29 090 A1 lehrt eine Isoliereinlage für eine Rohrschelle, wobei die Isoliereinlage die Rohrschelle teilweise umgreift.

Aufgabe der Erfindung ist es, eine Rohrschelle mit zumindest einem Schellenbügel und mehreren, flexibel anordnenbaren Auflageelementen zu schaffen, die eine gute Entkopplung, insbesondere gegenüber Schall, gewährleisten.

Die Aufgabe ist durch die Merkmale des unabhängigen Anspruchs gelöst. Vorteilhafte Weiterbildungen sind in den Unteransprüchen dargelegt.

Gemäss der Erfindung sind ein erster Halteabschnitt und ein zweiter Halteabschnitt zum Umgreifen eines ersten seitlichen Randbereiches des zumindest einen Schellenbügels zum lösbaren Festlegen der Auflageelemente an dem zumindest einen Schellenbügel vorgesehen, wobei der erste Halteabschnitt und der zweite Halteabschnitt quer zur Krümmung des zumindest einen Schellenbügels ausgerichtet sind, wobei die Auflageelemente jeweils S-förmig mit drei zueinander verlaufenden Abschnitten ausgebildet sind, und wobei ein erster freier Abschnitt den ersten Halteabschnitt, der zweite, mittlere Abschnitt den zweiten Halteabschnitt und der andere freie, dritte Abschnitt den frei auskragenden Auflageabschnitt des Auflageelementes ausbildet.

Die frei auskragenden Auflagerabschnitte gewährleisten eine vorteilhafte Entkopplung der festgelegten Leitung gegenüber der Rohrschelle. Unter einem frei auskragenden Auflagerabschnitt wird der Abschnitt des Auflageelementes verstanden, der an einem Ende mit dem Auflageelement fest verbunden ist und mit dem anderen Ende ohne eine Verbindung mit dem Auflageelement von diesem konsolenartig abragt. Unter einem seitlichen Randbereich wird der Bereich des zumindest einen Schellenbügels verstanden, der die Ausdehnung des zumindest einen Schellenbügels quer zu dessen Krümmung begrenzt.

Der erste und der zweite Halteabschnitt bilden eine Halteeinrichtung des Auflageelementes aus. Der erste Halteabschnitt ist mit einem krümmungsseitig aussenliegenden Wandabschnitt des zumindest einen Schellenbügels und der zweite Halteabschnitt mit dem krümmungsseitig innenliegenden Wandabschnitt des Schellenbügels in Anlage bringbar.

Die Auflageelemente werden bedarfsweise an dem zumindest einen Schellenbügel angeordnet. Je nach Grösse der Haltekraft zwischen dem Auflageelement und dem zumindest einen Schellenbügel sind die Auflageelemente für eine Justierung entlang der Krümmung des zumindest einen Schellenbügel zusätzlich verschiebbar. Mindestens zwei, vorteilhaft drei oder mehr Auflageelemente sind an dem zumindest einen Schellenbügel vorgesehen, welche die festzulegende Leitung in der Rohrschelle fixieren. Bei grossen Rohrschellen oder bei schweren Leitungen werden entsprechend mehr Auflageelemente abhängig von der auftretenden Belastung an dem zumindest einen Schellenbügel angeordnet.

Die Auflageelemente sind nicht nur flexibel in der Anordnung an dem zumindest einen Schellenbügel, sondern können aus einem Material gefertigt werden, dass vorteilhafte Eigenschaften für die Entkopplung, insbesondere gegenüber Schall, aufweist.

Vorzugsweise sind die Auflageelemente aus einem Federstahl gefertigt, der eine sehr geringe Dämpfung aufweist. Infolge dieser Materialeigenschaft wirkt der Auflageabschnitt als ideale Feder und gewährleistet eine optimale Entkopplung der in der Rohrschelle festgelegten Leitung.

Vorteilhaft sind die Auflageelemente aus einem bandförmigen Material gefertigt. In einer alternativen Ausführungsform ist das Auflageelement aus einem Draht beispielsweise mit einem kreisförmigen Querschnitt gefertigt.

Bevorzugt verlaufen der erste und der zweite Halteabschnitt zumindest bereichsweise parallel zueinander und bilden damit einen vorteilhaften Aufnahmeraum zur Aufnahme des ersten seitlichen Randbereichs des zumindest einen Schellenbügels.

Vorzugsweise weist der zumindest eine Schellenbügel eine Wandstärke auf und der erste Halteabschnitt ist zu dem zweiten Halteabschnitt zumindest bereichsweise in einem Abstand beabstandet, wobei der Abstand maximal der Wandstärke des zumindest einen Schellenbügels entspricht. Jedes Auflageelement ist dadurch klemmend an dem zumindest einen Schellenbügel gehalten. Das Auflageelement lässt sich einfach auf den zumindest einen Schellenbügel aufstecken beziehungsweise aufschieben. Infolge der Klemmung zwischen den Halteabschnitten und den entsprechenden Wandabschnitten des zumindest einen Schellenbügels ist jedes Auflageelement nicht nur einfach und lösbar an dem zumindest einen Schellenbügel festlegbar sondern auch sicher an diesem gehalten.

Bevorzugt ist an zumindest einem der Halteabschnitte ein Bereich mit einer Biegung vorgesehen, deren konkave Seite dem anderen Halteabschnitt zugewandt ist. Mittels der Biegung wird die auf den entsprechenden Wandabschnitt des zumindest einen Schellenbügels wirkende Haltekraft bereichsweise erhöht und eine sichere Fixierung des Auflageelementes am Schellenbügel gewährleistet.

Vorzugsweise ist an einem freien Ende eines der Halteabschnitte ein Hintergreifabschnitt zum zumindest bereichsweisen Umgreifen eines zweiten seitlichen Randbereiches des zumindest einen Schellenbügels vorgesehen, der eine sichere Fixierung des Auflageelementes an dem zumindest einen Schellenbügel gewährleistet. Der zweite seitliche Randbereich des zumindest einen Schellenbügels liegt dem ersten seitlichen Randbereich des zumindest einen Schellenbügels gegenüber und begrenzt die Ausdehnung des zumindest einen Schellenbügels in die andere Richtung quer zur Krümmung.

Bevorzugt ist der Hintergreifabschnitt vom freien Ende des einen Halteabschnitts abragend dem anderen Halteabschnitt zugewandt, womit die von den Halteabschnitten geschaffene Aufnahme im Bereich des freien Endes eines der Halteabschnitte eingeengt und dadurch ein unbeabsichtigtes Lösen des Auflageelementes im festgelegten Zustand an dem zumindest einen Schellenbügel weitgehend ausgeschlossen wird.

Erfindungsgemäss sind die Auflageelemente jeweils S-förmig mit drei zueinander verlaufenden Abschnitten ausgebildet, wobei ein erster freier Abschnitt den ersten Halteabschnitt, der zweite, mittlere Abschnitt den zweiten Halteabschnitt und der andere freie, dritte Abschnitt den frei auskragenden Auflageabschnitt des Auflageelement es bildet. Ein derartig ausgebildetes Auflageelement lässt sich einfach an dem zumindest einen Schellenbügel anordnen, wobei der gebogene Abschnitt zwischen dem ersten freien Abschnitt und dem zweiten, mittleren Abschnitt des Auflageelementes einen Anschlag für den Montagevorgang ausbildet. Zudem lässt sich ein derartiges Auflageelement einfach fertigen.

Bevorzugt ist der frei auskragende Auflageabschnitt der Auflageelemente krümmungsseitig innen mit einer Beschichtung versehen, die mit der festzulegenden Leitung in Anlage kommt. Die Beschichtung schützt beispielsweise die festzulegende Leitung vor Beschädigungen, wie z. B. Kratzer oder dergleichen, bei der Installation der Leitung, und ist beispielsweise aus einem Thermoplast oder Elastomer gefertigt. In einer Variante dient die Beschichtung beispielsweise als Gleitlager, welche eine Verschiebbarkeit der festgelegten Leitung in deren Längserstreckung zulässt. Eine als Gleitlager geeignete Beschichtung ist beispielsweise ein Polytetraflourethylen (PTFE) oder ein Polyester.

Vorzugsweise sind die Auflageelemente gleichmässig beabstandet verteilt zueinander an dem zumindest einen Schellenbügel angeordnet. Die Auflageelemente sind somit in einem gleichen Winkel bezogen auf das durch die Krümmung des zumindest einen Schellenbügels bestimmte Zentrum (= Zentrumswinkel) angeordnet.

In einer Variante dazu können auch mehrere Auflageelemente direkt benachbart zueinander zu Gruppen zusammengefasst und diese Gruppen bedarfsweise an dem zumindest einen Schellenbügel angeordnet werden. Beispielsweise bei schweren Leitungen können so im Bereich der hohen Lasten mehr Auflageelemente als in den übrigen Bereichen des zumindest einen Schellenbügels vorgesehen werden, in denen die Auflageelemente im Wesentlichen nur der Ausrichtung der festzulegenden Leitung in der Rohrschelle dienen.

Die Erfindung wird nachstehend anhand von Ausführungsbeispielen näher erläutert. Es zeigen:
- Fig. 1: Ein erstes Ausführungsbeispiel einer Rohrschelle in Seitenansicht;
- Fig. 2: ein an einem Schellenbügel festgelegtes Auflageelement im Schnitt entlang Linie II- II in Fig. 1; und
- Fig. 3: ein zweites Ausführungsbeispiel eines Auflageelementes im Schnitt.

Grundsätzlich sind in den Figuren gleiche Teile mit den gleichen Bezugszeichen versehen.

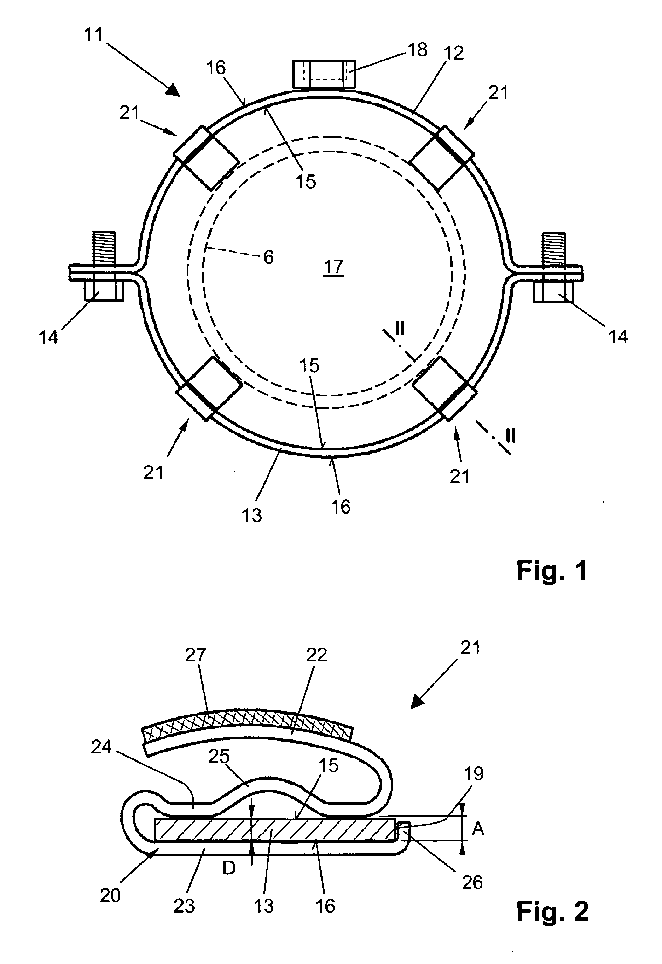

Die in den Figuren 1 und 2 dargestellte Rohrschelle 11 weist zwei Schellenbügel 12 und 13 auf, die über zwei Schrauben 14 miteinander verbindbar sind. Die Schellenbügel 12 und 13 weisen jeweils eine Krümmung mit einem krümmungsseitig innenliegenden Wandabschnitt 15 und mit einem krümmungsseitig aussenliegenden Wandabschnitt 16 auf, wobei die krümmungsseitig innenliegenden Wandabschnitte 15 einen Aufnahmeraum 17 für eine Leitung 6 begrenzen. An dem einen Schellenbügel 12 ist ein Anschlusskopf 18 für ein Befestigungselement zur Festlegung der Rohrschelle 11 an einem Untergrund vorgesehen.

Weiter weist die Rohrschelle 11 vier, jeweils einteilig und jeweils S-förmig mit drei im Wesentlichen parallel zueinander verlaufenden Abschnitten ausgebildete Auflageelemente 21 für die festzulegende Leitung 6 auf. Die Auflageelemente 21 sind lösbar und verschieblich an dem Schellenbügel 12 bzw. 13 gehalten. Ein erster freier Abschnitt bildet einen ersten Halteabschnitt 23, der zweite, mittlere Abschnitt einen zweiten Halteabschnitt 24 und der andere freie, dritte Abschnitt einen frei auskragenden Auflageabschnitt 22 des Auflageelementes 21 aus. Der erste Halteabschnitt 23 und der zweite Halteabschnitt 24 bilden eine Halteeinrichtung des Auflageelementes 21 und umgreifen einen ersten seitlichen Randbereich 20 des Schellenbügels 12 bzw. 13 zum lösbaren Festlegen der Auflageelemente 21 an dem Schellenbügel 12 bzw. 13. Der erste Halteabschnitt 23 und der zweite Halteabschnitt 24 sind quer zur Krümmung des Schellenbügels 12 bzw. 13 ausgerichtet. Der erste Halteabschnitt 23 und der zweite Halteabschnitt 24 sind bereichsweise parallel zueinander ausgerichtet.

Der Schellenbügel 12 bzw. 13 weist eine Wandstärke D auf und der erste Halteabschnitt 23 ist zu dem zweiten Halteabschnitt 24 bereichsweise in einem Abstand A beabstandet, wobei der Abstand A maximal der Wandstärke D des Schellenbügel 12 bzw. 13 entspricht. Die Auflageelement e 21 sind klemmend an dem Schellenbügel 12 bzw. 13 gehalten und lassen sich einfach von dem Schellenbügel 12 bzw. 13 entfernen, neu anordnen oder entlang der Krümmung des Schellenbügels 12 bzw. 13 verschieben. An dem zweiten Halteabschnitte 24 ist ein Bereich mit einer Biegung 25 vorgesehen, deren konkave Seite dem ersten Halteabschnitt 23 zugewandt ist.

Der frei auskragende Auflageabschnitt 22 des Auflageelementes 21 ist krümmungsseitig innenliegend und zum krümmungsseitig innenliegenden Wandabschnitt 15 des Schellenbügels 12 bzw. 13 beabstandet angeordnet. Der frei auskragende Auflageabschnitt 22 bildet ein federndes Lager für die in der Rohrschelle 11 festgelegte Leitung 6. Krümmungsseitig innen sind die Auflageabschnitte 22 der Auflageelemente 21 mit einer Beschichtung 27 aus einem elastischen Material versehen.

Die Auflageelemente 21 sind gleichmässig beabstandet verteilt zueinander an den Schellenbügeln 12 und 13 angeordnet. Die Auflageelemente 21 sind aus einem bandförmigen Federstahl gefertigt.

An dem freien Ende des ersten Halteabschnitts 23 ist ein Hintergreifabschnitt 26 zum bereichsweisen Umgreifen eines zweiten seitlichen Randbereiches 19 des Schellenbügels 13 vorgesehen, wobei der Hintergreifabschnitt 26 vom freien Ende des ersten Halteabschnitts 23 abragend dem zweiten Halteabschnitt 24 zugewandt ist. Der von dem Hintergreifabschnitt 26 bereichsweise umgriffene zweite seitliche Randbereich 19 ist dem ersten seitlichen Randbereich 20 des Schellenbügels 13 gegenüberliegend angeordnet.

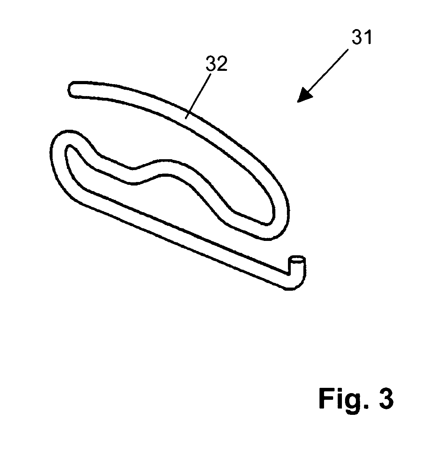

Das in Figur 3 dargestellte Auflageelement 31 weist im Gegensatz zu dem Auflageelement 21 keine innenliegende Beschichtung an dem frei auskragenden Auflageabschnitt 32 auf und ist aus einem drahtförmigen Federstahl gefertigt. Ansonsten entspricht die Ausgestaltung des Auflageelementes 31 im Wesentlichen der Ausgestaltung des in den Figuren 1 und 2 dargestellten Auflageelementes 21.

## Patentansprüche

1. Rohrschelle mit zumindest einem eine Krümmung aufweisenden Schellenbügel (12, 13), der einen krümmungsseitig innenliegenden Wandabschnitt (15) aufweist, und mit mehreren Auflageelementen (21; 31) für eine festzulegende Leitung (6), wobei die Auflageelemente (21; 31) jeweils einteilig sind und einen krümmungsseitig innenliegenden, zum krümmungsseitig innenliegenden Wandabschnitt (15) des zumindest einen Schellenbügels (12, 13) beabstandeten Auflageabschnitt (22) aufweisen, wobei der Auflageabschnitt (22) frei auskragend an dem Auflageelement (21; 31) angeordnet ist,
**dadurch gekennzeichnet, dass**
ein erster Halteabschnitt (23) und ein zweiter Halteabschnitt (24) zum Umgreifen eines ersten seitlichen Randbereiches (20) des zumindest einen Schellenbügels (12, 13) zum lösbaren Festlegen der Auflageelemente (21; 31) an dem zumindest einen Schellenbügel (12, 13) vorgesehen sind, wobei der erste Halteabschnitt (23) und der zweite Halteabschnitt (24) quer zur Krümmung des zumindest einen Schellenbügels (12, 13) ausgerichtet sind, und
dass die Auflageelemente (21; 31) jeweils S-förmig mit drei zueinander verlaufenden Abschnitten ausgebildet sind,
wobei ein erster freier Abschnitt den ersten Halteabschnitt (23), der zweite, mittlere Abschnitt den zweiten Halteabschnitt (24) und der andere freie, dritte Abschnitt den frei auskragenden Auflageabschnitt (22) des Auflageelementes (21; 31) ausbildet.

2. Rohrschelle nach Anspruch 1, **dadurch gekennzeichnet, dass** die Auflageelemente (21; 31) aus einem Federstahl gefertigt sind.

3. Rohrschelle nach Anspruch 1 oder 2, **dadurch gekennzeichnet, dass** der erste Halteabschnitt (23) und der zweite Halteabschnitt (24) zumindest bereichsweise parallel zueinander ausgerichtet sind.

4. Rohrschelle nach einem der Ansprüche 1 bis 3, **dadurch gekennzeichnet, dass** der zumindest eine Schellenbügel (12, 13) eine Wandstärke (D) aufweist und der erste Halteabschnitt (23) zu dem zweiten Halteabschnitt (24) zumindest bereichsweise in einem Abstand (A) beabstandet ist, wobei der Abstand (A) maximal der Wandstärke (D) des zumindest einen Schellenbügel (12, 13) entspricht.

5. Rohrschelle nach einem der Ansprüche 1 bis 4, **dadurch gekennzeichnet, dass** an zumindest einem der Halteabschnitte (23, 24) ein Bereich mit einer Biegung vorgesehen ist, deren konkave Seite dem anderen Halteabschnitt zugewandt ist.

6. Rohrschelle nach einem der Ansprüche 1 bis 5, **dadurch gekennzeichnet, dass** an einem freien Ende eines der Halteabschnitte (23) ein Hintergreifabschnitt (26) zum zumindest bereichsweisen Umgreifen eines zweiten seitlichen Randbereiches (19) des zumindest einen Schellenbügels (12, 13) vorgesehen ist.

7. Rohrschelle nach Anspruch 6, **dadurch gekennzeichnet, dass** der Hintergreifabschnitt (26) vom freien Ende des einen Halteabschnitts (23) abragend dem anderen Halteabschnitt (24) zugewandt ist.

8. Rohrschelle nach einem der Ansprüche 1 bis 7, **dadurch gekennzeichnet, dass** der frei auskragende Auflageabschnitt (22) der Auflageelemente (21) krümmungsseitig innen mit einer Beschichtung (27) versehen sind.

9. Rohrschelle nach einem der Ansprüche 1 bis 8, **dadurch gekennzeichnet, dass** die Auflageelemente (21) gleichmässig beabstandet verteilt zueinander an dem zumindest einen Schellenbügel (12, 13) angeordnet sind.

## Claims

1. Pipe clamp, comprising at least one clamp bow (12, 13) which has a curvature and has a wall section (15) located on the inside of the curvature, and comprising a plurality of support elements (21; 31) for a conduit (6) to be fastened, wherein
the support elements (21; 31) are each configured in one piece and include a support section (22) located inside the curvature and spaced from the wall section (15) located on the inside of the curvature of the at least one clamp bow (12, 13), the support section (22) being arranged in a freely projecting manner on the support element (21; 31),
**characterised in that**
a first retaining section (23) and a second retaining section (24) for extending around a first lateral edge region (20) of the at least one clamp bow (12, 13) are provided for releasably fixing the support elements (21; 31) to the at least one clamp bow (12, 13), the first retaining section (23) and the second retaining section (24) being aligned transversely to the curvature of the at least one clamp bow (12, 13), and
**in that** the support elements (21; 31) are in each case S-shaped and are configured with three sections disposed with respect to one another,
a first free section forming the first retaining section (23), the second, middle section forming the second retaining section (24) and the other free, third section forming the freely projecting support section (22) of the support element (21; 31).

2. Pipe clamp according to Claim 1, **characterised in that** the support elements (21; 31) are produced from a spring steel.

3. Pipe clamp according to Claim 1 or 2, **characterised in that** the first retaining section (23) and the second retaining section (24) are aligned parallel to one another at least zonally.

4. Pipe clamp according to any one of Claims 1 to 3, **characterised in that** the at least one clamp bow (12, 13) has a wall thickness (D) and the first retaining section (23) is spaced from the second retaining section (24) at least zonally at a distance (A), the distance (A) being not greater than the wall thickness (D) of the at least one clamp bow (12, 13).

5. Pipe clamp according to any one of Claims 1 to 4, **characterised in that** a region having a bend, the concave side of which is oriented towards the other retaining section, is provided on at least one of the retaining sections (23, 24).

6. Pipe clamp according to any one of Claims 1 to 5, **characterised in that** an abutment section (26) for extending at least partially around a second lateral edge region (19) of the at least one clamp bow (12, 13) is provided on a free end of one of the retaining sections (23).

7. Pipe clamp according to Claim 6, **characterised in that** the abutment section (26) projecting from the free end of the one retaining section (23) is oriented towards the other retaining section (24).

8. Pipe clamp according to any one of Claims 1 to 7, **characterised in that** the freely projecting support section (22) of the support elements (21) is provided with a coating (27) on the inside of the curvature.

9. Pipe clamp according to any one of Claims 1 to 8, **characterised in that** the support elements (21) are distributed with uniform spacing from one another on the at least one clamp bow (12, 13).

## Revendications

1. Collier pour tuyau comprenant au moins une bride de collier (12, 13) présentant une courbure, laquelle bride de collier comporte une partie de paroi (15) située à l'intérieur côté courbure, et plusieurs éléments de support (21 ; 31) pour une conduite à fixer (6),
dans lequel les éléments de support (21 ; 31) sont respectivement d'un seul tenant et comportent une partie de support (22) située à l'intérieur côté courbure et espacée de la partie de paroi (15) située à l'intérieur côté courbure de la au moins une bride de collier (12, 13), dans lequel la partie de support (22) est agencée sur l'élément de support (21 ; 31) de manière à faire librement saillie vers l'extérieur,
**caractérisé en ce que**
une première partie de retenue (23) et une seconde partie de retenue (24) sont prévues sur la au moins une bride de collier (12, 13) de manière à envelopper une première région de bord latérale (20) de la au moins une bride de collier (12, 13) pour fixer l'élément de support (21 ; 31) de manière amovible, dans lequel la première partie de retenue (23) et la seconde partie de retenue (24) sont alignées perpendiculairement à la courbure de la au moins une bride de collier (12, 13), et
**en ce que** les éléments de support (21 ; 31) sont respectivement en forme de S avec trois parties s'étendant les unes par rapport aux autres,
une première partie libre étant la première partie de retenue (23), la deuxième partie centrale formant la seconde partie de retenue (24) et la troisième partie libre supplémentaire formant la partie de support (22) de l'élément de support (21 ; 31), faisant librement saillie vers l'extérieur.

2. Collier pour tuyau selon la revendication 1, **caractérisé en ce que** les éléments de support (21 ; 31) sont fabriqués à partir d'un acier pour ressorts.

3. Collier pour tuyau selon la revendication 1 ou 2, **caractérisé en ce que** la première partie de retenue (23) et la seconde partie de retenue (24) sont alignées parallèlement l'une à l'autre au moins dans certaines zones.

4. Collier pour tuyau selon l'une quelconque des revendications 1 à 3, **caractérisé en ce que** la au moins une bride de collier (12, 13) présente une épaisseur de paroi (D) et la première partie de retenue (23) est espacée de la seconde partie de retenue (24) d'une distance (A) au moins dans certaines zones, dans lequel la distance (A) correspond au maximum à l'épaisseur de paroi (D) de la au moins une bride de collier (12, 13).

5. Collier pour tuyau selon l'une quelconque des revendications 1 à 4, **caractérisé en ce que** sur au moins l'une des parties de retenue (23, 24) est prévue une région avec une courbure, dont le côté concave est dirigé vers l'autre partie de retenue.

6. Collier pour tuyau selon l'une quelconque des revendications 1 à 5, **caractérisé en ce que** sur une extrémité libre de l'une des parties de retenue (23) est prévue une partie de prise arrière (26) destinée à envelopper, au moins dans certaines zones, une seconde région de bord latérale (19) de la au moins une bride de collier (12, 13).

7. Collier pour tuyau selon la revendication 6, **caractérisé en ce que** la partie de prise arrière (26) est dirigée vers l'autre partie de retenue (24) en faisant saillie à partir de l'extrémité libre de la partie de retenue (23).

8. Collier pour tuyau selon l'une quelconque des revendications 1 à 7, **caractérisé en ce que** la partie de support (22) de l'élément de support (21) faisant librement saillie vers l'extérieur est munie d'un revêtement (27) situé à l'intérieur côté courbure.

9. Collier pour tuyau selon l'une quelconque des revendications 1 à 8, **caractérisé en ce que** les éléments de support (21) sont agencés de manière équidistante les uns par rapport aux autres sur la au moins une bride de collier (12, 13).
